# FASCICULE DE BREVET EUROPEEN

(11) **EP 2 257 694 B1**
(45) Date de publication et mention de la délivrance du brevet: **23.01.2013**
(21) Numéro de dépôt: 09718837.9
(22) Date de dépôt: 27.02.2009
(51) Int. Cl.: F01D 5/14

(54) **AUBE AVEC PLATEFORME 3D COMPORTANT UN BULBE INTERAUBES**
SCHAUFEL AUFWEISEND EINE 3D-PLATTFORM MIT EINEM ZWISCHENSCHAUFELWULST
BLADE WITH 3D PLATFORM COMPRISING AN INTER-BLADE BULB

(30) Priorité: 28.02.2008 FR 0851274
(43) Date de publication de la demande: 08.12.2010
(73) Titulaire: SNECMA, 75015 Paris (FR)
(72) Inventeur: GUIMBARD, Jean-Michel, F-77930 Cely En Biere (FR); KUENY, Olivier, F-91230 Montgeron (FR); PINTAT, Ludovic, 94140 ALFORTVILLE (FR)
(74) Mandataire: Barbin le Bourhis, Joël
(86) Numéro de dépôt international: PCT/FR2009/050317
(87) Numéro de publication internationale: WO 2009/112774

(56) Documents cités:
- EP-A- 1 669 544
- EP-A- 1 681 438
- GB-A- 944 166
- US-A1- 2007 258 818

## Description

La présente invention concerne une aube pour roue à aubes de turbomachine, comportant un profilé aérodynamique formé avec un intrados, un extrados, un bord de fuite et un bord d'attaque, et une plateforme s'étendant à l'une des extrémités du profilé dans une direction globalement perpendiculaire à une direction longitudinale du profilé, l'aube étant apte à être disposée avec une pluralité d'aubes sensiblement identiques pour former une couronne autour d'un axe de couronne et définir suivant celui-ci un amont et un aval, couronne dans laquelle les profilés sont disposés sensiblement radialement, et les plateformes d'aubes adjacentes se rejoignent deux à deux de manière à former une surface inter-profilés reliant l'intrados d'un profilé à l'extrados du profilé voisin.

La réunion de telles aubes autour d'un axe commun permet de constituer une roue à aube, dont l'axe est l'axe de la couronne. Cette roue à aube peut être mobile et ainsi recevoir une énergie venant du flux ou communiquer une énergie au flux circulant à travers la roue à aube ; elle peut également être fixe, et dans ce cas là, son rôle est de canaliser le flux.

L'aube peut constituer une pièce distincte en elle-même, ou bien être intégrée avec d'autres aubes, pour former par exemple un secteur de distributeur ou un disque à aubes multiples.

Habituellement, une turbomachine comporte plusieurs étages d'aubes, formant une succession de roues à aubes fixes ou mobiles, disposées successivement le long du parcours du fluide à travers la turbomachine (Il peut y avoir plusieurs parcours, notamment dans le cas de turboréacteurs double flux). Le rendement de la turbomachine est directement lié à la capacité de chacune des roues à aubes, et donc plus particulièrement de chacune des aubes qui en font partie, à interagir de manière efficace avec le flux, c'est-à-dire sans dissiper de l'énergie inutilement. On notera que notamment dans les turbomachines aéronautiques comme des turboréacteurs ou turbopropulseurs, les vitesses du flux peuvent être considérables, notamment supersoniques : pour une aube disposée dans un tel flux, il est essentiel d'optimiser la qualité d'écoulement du flux autour de l'aube.

Dans l'aube, la forme du profilé aérodynamique doit naturellement être optimisée, pour guider de manière efficace le flux dans lequel le profilé se trouve, ou encore pour recevoir ou pour transmettre le maximum d'énergie au flux sans dissiper d'énergie sous forme d'échauffement.

Toutefois, si la forme du profilé est importante, il est apparu que la forme de la surface de la plateforme du côté du profilé joue également un rôle essentiel pour la qualité de l'écoulement du flux à travers l'aube. Ainsi, les phénomènes sur lesquels sont susceptibles d'agir les plateformes d'une roue à aubes peuvent être responsables de 30% des pertes totales au niveau de celle-ci.

Pour simplifier, dans ce qui suit, on désigne par surface de plateforme la surface de la plateforme du côté du profilé, sans répéter le côté duquel se trouve cette surface.

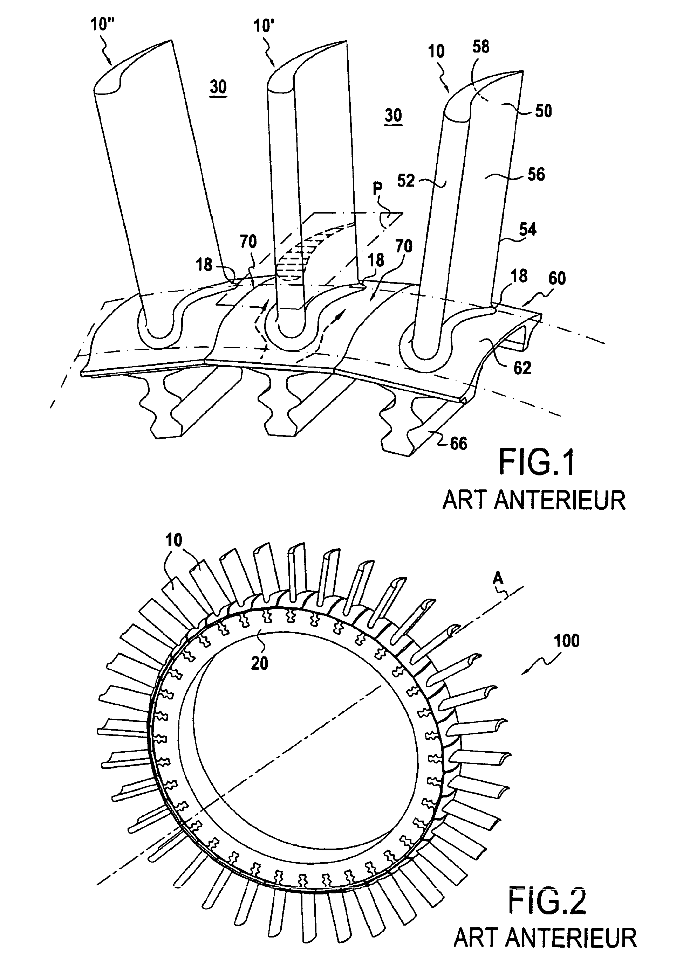

Le passage du flux autour des aubes telles que celles indiquées en préambule est illustré par les figures 1 et 2.

La figure 1 fait apparaître trois aubes 10 identiques faisant partie d'une roue à aubes 100 présentée en figure 2. Chaque aube 10 est conçue pour être assemblée avec d'autres aubes 10 identiques, pour former la roue à aubes 100. Cette roue est constituée essentiellement par les aubes 10 montées sur un disque rotor 20. Dans cette roue à aube 100, les aubes 10 sont montées de manière périodique autour de l'axe A de la roue. Globalement, le flux de fluide s'écoule suivant l'axe A d'un côté amont à un côté aval de la roue.

Chaque aube 10 comprend un profilé aérodynamique 50, une plate-forme 60, ainsi qu'un pied 66 dans le cas particulier qui est représenté d'une aube de rotor, pour la fixation de l'aube sur un disque de rotor. La plate-forme 60 s'étend dans une direction globalement perpendiculaire à la direction longitudinale du profilé 50 et comporte une surface de plateforme 62 du côté du profilé. Comme les aubes 10 sont assemblées les unes contre les autres, leurs plateformes se rejoignent deux à deux de manière à créer une surface sensiblement continue dite surface 'inter-profilés' 70 s'étendant de l'intrados 56 d'un profilé à l'extrados 58 du profilé voisin. La surface inter-profilés regroupe ainsi les portions adjacentes des surfaces de plateforme 62 de deux aubes adjacentes 10,10' situées entre leurs profilés 50 respectifs. La surface de plateforme 62 est reliée aux surfaces extérieures du profilé 50 par des surfaces de raccordement 18 (qui sont sensiblement des congés de raccordement à rayon évolutif).

On notera de plus que dans les exemples représentés sur les figures 1 à 3, la surface 62 de la plateforme 60 est de révolution, c'est-à-dire que sa surface est sensiblement une partie d'une surface de révolution, autour de l'axe A de la roue à aubes. Une surface de révolution autour d'un axe désigne ici une surface engendrée par la rotation d'une courbe autour dudit axe. Une telle forme est usuelle pour des surfaces de plateformes d'aubes pour roues à aubes de turbomachines.

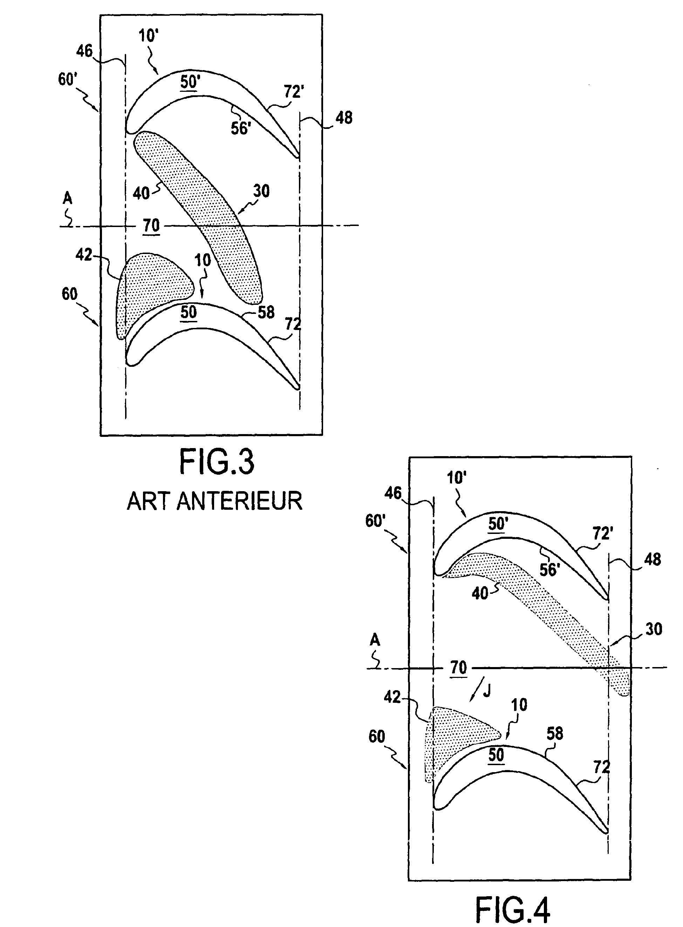

Dans l'écoulement, lorsque le flux arrive sur le bord d'attaque d'un profilé 50, il se scinde en deux passant en partie du côté de l'intrados 56 et en partie du côté de l'extrados 58 du profilé 50. La figure 3 présente de manière simplifiée la manière dont s'établit le champ de pression dans le 'canal inter-profilés' 30 s'étendant entre les profilés.

La figure 3 est une vue en coupe perpendiculairement à leurs axes respectifs des profilés de deux aubes 10 et 10' montées côte à côte dans une roue à aubes. Plus particulièrement, la figure 3 fait apparaître approximativement le champ de pression que l'on peut observer habituellement au voisinage de la surface inter-profilés 70 entre l'extrados 58 d'un premier profilé et l'intrados 56' d'un deuxième profilé.

La figure 3 comporte une courbe isopression 40 correspondant à une relativement haute pression et une courbe isopression 42 correspondant à une relativement basse pression, ces pressions étant observées dans le flux pendant le fonctionnement de la turbomachine. Un fort gradient de pression J est créé entre l'intrados et l'extrados des deux profilés du fait que la pression est bien plus grande au voisinage de l'intrados qu'au voisinage de l'extrados. Sous l'effet de ce gradient de pression J, un écoulement transversal au canal 'inter-profilés' 30 est généré au pied (et en tête) des profilés et les particules ainsi déviées sont poussées vers l'extrados du profilé 50. Ce phénomène crée au sein du canal 'inter-profilés' 30 de forts écoulements secondaires non dirigés dans le sens général de l'écoulement qui génèrent des tourbillons notamment au voisinage de l'extrados.

Pour tenter de limiter la dissipation inutile d'énergie qui en résulte au voisinage de la surface inter-profilés, le brevet U.S. 7 220 100 propose une forme de surface inter-profilés qui comporte principalement une rampe convexe située immédiatement au voisinage de l'intrados du profilé, et une zone concave située immédiatement au voisinage de l'extrados du profilé, chacune de ces zones se trouvant sensiblement au point médian de la corde du profilé. Malgré ce perfectionnement, il demeure certains tourbillons dissipateurs d'énergie dans l'espace entre les deux profilés, et il existe donc un besoin pour une forme d'aube qui réduise davantage les tourbillons parasites se formant dans cet espace.

Le brevet US 6283713 propose une autre forme pour la surface inter-profilés, comportant d'une part une région convexe adjacente à l'extrados de l'aube et une concave adjacente à l'intrados de l'aube, ces deux régions étant de taille significative car s'étendant sur une majeure partie de la longueur de corde de l'aube. Selon une alternative, l'aube comporte au niveau du bord de fuite, une bosse et un creux situés respectivement du côté de l'extrados et de l'intrados. Toutefois ces configurations de la surface inter-profilés ne permettent pas de résoudre efficacement le problème de la dissipation inutile d'énergie au voisinage de cette surface.

La demande de brevet US 2007/0258818 divulgue une autre forme pour la surface inter-profilés, dans laquelle ce problème n'est pas non plus résolu de manière efficace.

Un premier objet de l'invention est de proposer une aube telle que celle présentée en préambule, qui minimise les dissipations inutiles d'énergie lors de l'interaction du flux avec l'aube, et reste de coût de revient faible en étant relativement facile à fabriquer.

Cet objectif est atteint grâce au fait que dans l'aube, la surface inter-profilés comporte, dans une moitié amont du profilé, une bosse située plus près de l'intrados que de l'extrados, et un passage en creux situé entre celle-ci et l'intrados.

Un avantage majeur de l'invention tient au fait que la forme particulière de surface de plateforme exposée précédemment permet une réduction sensible des écoulements parasites entre les profilés au voisinage de cette surface entre les profilés. En outre cette surface peut rester très simple à usiner puisqu'une grande partie de la surface peut être de révolution.

La présence de la bosse a pour conséquence que la vitesse du flux augmente alors que sa pression diminue, et cela dans la zone voisine de l'intrados qui habituellement présente la plus grande pression. Il en résulte avantageusement que la zone de forte pression est réduite, et il s'en suit une diminution du gradient de pression dans le canal inter-profilés et une réduction des tourbillons dissipateurs d'énergie indésirables.

Le fait de préserver un creux entre cette bosse et l'intrados a pour objectif de centrer l'effet de réduction des hautes pressions indiqué ci-dessus, précisément sur la zone de haute pression. Grâce à ce centrage de la bosse, non pas contre l'intrados mais à une certaine distance de celui-ci, l'effet de la bosse (atténuation de la zone nocive de haute pression) est maximal.

En outre, le passage en creux, situé sensiblement le long de l'intrados engendre une légère augmentation relative de pression dans cette zone, ce qui contribue ainsi à écarter la zone de haute pression de la zone de basse pression, située à l'opposé au voisinage de l'extrados du profilé voisin.

Dans le présent document, les différents exemples utilisés présentent une aube ayant une plateforme située du côté intérieur par rapport au profilé, dans la direction radiale, et non du côté extérieur. On notera à cet égard que l'invention vise tout autant une aube comportant une plateforme située en tête de profilé, c'est-à-dire du côté radialement opposé au centre de couronne, qu'une aube comportant une plateforme située en pied de profilé, du côté intérieur par rapport à la couronne. Une aube comportant à la fois les deux plateformes, en tête et en pied de profilé, est également possible, avec au moins une plateforme agencée de manière à pouvoir former une surface inter-profilés selon l'invention.

D'autre part, l'invention vise toute aube apte à être intégrée dans une turbomachine, et particulièrement dans des turbomachines aéronautiques. L'aube selon l'invention s'avère particulièrement efficace dans les étages de turbines, notamment de turbines basse pression.

Une conformation avantageuse de la plateforme de l'aube se définit par rapport à un profil perpendiculaire à l'axe A de couronne. Dans ce mode de réalisation, la surface inter-profilés présente un profil situé dans un plan perpendiculaire à l'axe de la couronne et situé axialement dans une moitié amont du profilé, ledit profil comportant successivement en partant de l'intrados du profilé, un creux suivi par une bosse.

En effet, l'efficacité de l'invention est particulièrement grande lorsque la forme en creux suivi par une bosse apparaît dans une section de la surface inter-profilés perpendiculaire à l'axe A.

Notons tout d'abord que par 'axialement', on fait référence ci-dessus à la position axiale suivant l'axe A de la couronne.

D'autre part, une position repérée axialement par rapport au profilé, se comprend aussi, de manière équivalente, par rapport à l'étendue suivant l'axe A, d'une section transversale du profilé au voisinage de la plateforme de l'aube. En effet, comme le profilé est disposé radialement dans la couronne, son étendue suivant l'axe A, ou l'étendue d'une section transversale sont sensiblement identiques.

La section transversale du profilé peut être par exemple la section dans le plan (P) représentée sur la figure 1, et représentée par les profils 72 et 72' sur la figure 3. Cette section s'étend axialement de la ligne 46 au point le plus amont du profilé (au voisinage de la surface de plateforme), à la ligne 48 correspondant au point le plus aval du profilé.

Selon un mode de réalisation, la surface inter-profilés comporte une partie de révolution ayant une forme de révolution par rapport à l'axe de la couronne, située du côté de l'extrados du profilé voisin par rapport à la bosse.

Selon un perfectionnement du mode de réalisation précédent, la bosse est reliée à ladite partie de révolution par une surface radialement descendante. En d'autres termes, la surface entre la bosse et la partie de révolution descend de manière monotone, sans présenter de replis, creux ou bosses intermédiaires.

Selon un mode de réalisation, dans l'aube le passage en creux comporte une partie ayant une forme de révolution par rapport à l'axe de la couronne.

Suivant un mode de réalisation, la surface inter-profilés comporte une partie ayant une forme de révolution par rapport à l'axe de couronne et s'étendant axialement sur toute la moitié aval du profilé.

Les trois modes de réalisation présentés ci-dessus, éventuellement complémentaires, permettent de minimiser le coût de revient de l'aube en conservant des parties de révolution de taille significative, que ce soit dans une partie de la surface inter-profilés correspondant au passage en creux, ou dans une partie de la surface inter-profilés située entre la bosse et l'extrados du profilé voisin, ou encore dans la moitié aval (axialement) de la surface inter-profilés.

La partie des outillages de fabrication correspondant aux surfaces de révolution est en effet particulièrement facile à réaliser ce qui réduit d'autant le coût de revient de l'aube.

Enfin, dans une aube selon l'invention, la bosse peut se prolonger ou s'étendre en amont ou en aval de la surface inter-profilés.

Un second objet de l'invention est de proposer un secteur de distributeur de turbomachine de rendement élevé, et dont le coût de revient reste modéré. Cet objectif est atteint grâce au fait que le secteur de distributeur comporte au moins une aube telles que celles définies précédemment.

Un troisième objet de l'invention est de proposer une roue à aubes de rendement élevé, et dont le coût de revient reste modéré. Cet objectif est atteint grâce au fait que la roue à aubes comporte une pluralité d'aubes telles que celles définies précédemment.

Un quatrième objet de l'invention est de proposer une turbomachine de rendement élevé, et dont le coût de revient reste modéré. Cet objectif est atteint grâce au fait que la turbomachine comporte au moins une roue à aubes telle que celle définie précédemment.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 déjà décrite est une vue en perspective de trois aubes connues disposées dans leur position relative telles que montées dans une roue à aubes,
- la figure 2 déjà décrite est une vue en perspective de la roue à aubes comprenant les aubes de la figure 1,
- la figure 3 déjà décrite est une coupe perpendiculairement à l'axe des profilés de deux profilés des aubes aérodynamiques représentés sur la figure 1, faisant apparaître les champs de pression dans l'espace séparant les deux aubes ;
- la figure 4 est une coupe similaire à la coupe de la figure 3, mais de deux profilés faisant partie d'aubes conformes à l'invention ;
- la figure 5 est une coupe de deux aubes aérodynamiques selon l'invention, faisant apparaître par des courbes de niveau la forme de la surface inter-profilés; et
- la figure 6 est une coupe perpendiculaire à l'axe de couronne, du canal inter-profilés entre deux aubes aérodynamiques, selon l'invention.

On notera que par souci de simplification, lorsqu'un élément apparaît sur différentes figures, à l'identique ou sous une forme peu différente, un même numéro lui est attribué sur les différentes figures et l'élément n'est décrit que la première fois où il est mentionné.

En faisant référence à la figure 4, l'effet produit sur le champ de pression dans le canal inter-profilés par une aube selon l'invention va maintenant être décrit.

La présente invention définit une forme de surface de plateforme qui permet de minimiser les phénomènes tourbillonnaires parasites au voisinage de la surface inter-profilés et ainsi d'augmenter le rendement de l'aube et donc de la roue à aube. La comparaison entre les figures 3 et 4 montre l'effet relatif de l'invention sur le champ de pression dans le canal inter-profilés 30 que permet d'obtenir la forme spécifique d'une aube selon l'invention:

Alors que sur la figure 3, les zones 40, 42 de forte et de basse pression respectivement sont relativement proches l'une de l'autre, dans la figure 4, on peut observer que celles-ci sont plus éloignées l'une de l'autre. Par voie de conséquence, le gradient de pression est sensiblement réduit, ainsi que la tendance des particules à migrer de l'intrados vers l'extrados en provoquant des tourbillons parasites.

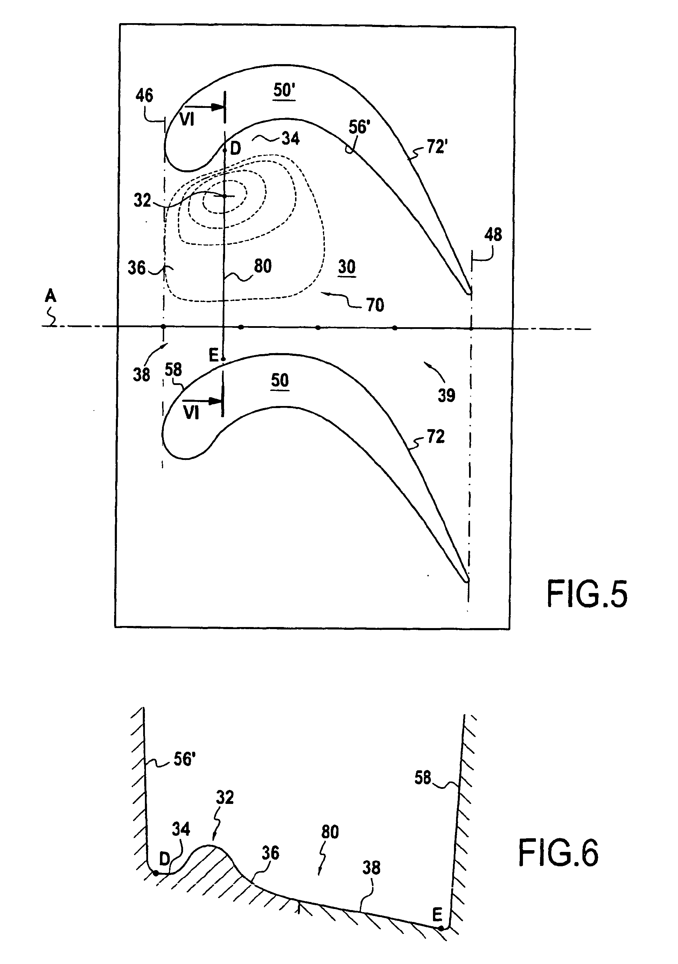

En faisant référence aux figures 5 et 6, l'agencement d'une aube selon l'invention va maintenant être décrit.

La figure 5 fait apparaître les sections 72 et 72' respectivement des deux profilés 50 et 50' dans une vue radiale des profilés, c'est-à-dire sensiblement suivant l'axe longitudinal de ces deux profilés. La section 72 (comme la section identique 72') est une section du profilé 50 établie au voisinage de la plateforme de l'aube, du côté du flux, à une distance de la plateforme suffisante pour que la section soit représentative de la partie inférieure du profilé et ne fasse pas apparaître les surfaces de raccordement 18 entre le profilé et la plateforme.

Les sections 72 et 72' s'étendent axialement entre les lignes 46 et 48 correspondant respectivement au point le plus amont et au point le plus aval de la section, définissant ainsi une échelle le long de la section allant respectivement de 0% à 100% de la ligne 46 à la ligne 48 suivant l'axe A.

La figure 6 fait apparaître le profil 80 traversant la surface inter-profilés 70 entre deux aubes selon l'invention. Le profil 80 est un profil de coupe relevé dans un plan perpendiculaire à l'axe A de la couronne. Ce profil est situé axialement dans la moitié amont de la section du profilé.

La figure 6 fait apparaître sous forme de courbes de niveau les formes de la surface inter-profilés 70 entre les deux contours 72 et 72' précédemment présentés en relation avec la figure 6.

La surface inter-profilés 70 comporte une bosse 32, située à distance de l'intrados 56' mais cependant au voisinage de celui-ci, et séparée de celui-ci par un passage en creux 34 qui la longe et favorise le passage du flux le long de l'intrados. La bosse 32 est située axialement principalement dans la moitié amont de la section 72 du profilé 50.

Plus précisément, la bosse présente un sommet (32) situé axialement entre 0 et 50% du profilé (50) du côté amont, et de préférence entre 0 et 25% de celui-ci.

La bosse 32 est reliée à l'extrados, suivant le contour 80, par une pente 36 (ou surface radialement descendante), qui se prolonge par une partie de surface de révolution 38.

En outre, la partie de la surface inter-profilés située axialement dans la moitié aval du profilé, est formée par une surface de révolution 39 par rapport à l'axe A de la couronne.

## Revendications

1. Aube (10) pour roue à aubes (100) de turbomachine, comportant un profilé aérodynamique (50) formé avec un intrados (56), un extrados (58), un bord de fuite (54) et un bord d'attaque, et
une plateforme (60) s'étendant à l'une des extrémités du profilé dans une direction globalement perpendiculaire à une direction longitudinale du profilé,
l'aube (10) étant apte à être disposée avec une pluralité d'aubes sensiblement identiques pour former une couronne autour d'un axe de couronne (A) et définir suivant celui-ci un amont et un aval, couronne dans laquelle les profilés sont disposés sensiblement radialement, et les plateformes (60) d'aubes adjacentes se rejoignent deux à deux de manière à former une surface inter-profilés (70) reliant l'intrados (56') d'un profilé (50) à l'extrados (58) du profilé voisin,
ladite aube étant **caractérisée en ce que**, en position montée, la surface inter-profilés (70) reliant l'intrados (56') du profil' (50) de l'aube (10) à l'extrados du profilé d'une aube voisine comporte, dans une moitié amont du profilé, une bosse (32) située à distance de l'intrados, mais plus près de l'intrados (56') du profilé (50) de l'aube (10) que de l'extrados (58) du profilé de l'aube voisine, et un passage en creux (34) situé entre celle-ci et l'intrados.

2. Aube selon la revendication 1, **caractérisée en ce que** la surface inter-profilés présente un profil situé dans un plan perpendiculaire à l'axe de la couronne et situé axialement dans une moitié amont du profilé, ledit profil comportant successivement en partant de l'intrados du profilé, le passage en creux suivi par ladite bosse.

3. Aube selon la revendication 1 ou 2, dans laquelle ledit passage en creux (34) comporte une partie ayant une forme de révolution par rapport à l'axe de la couronne (A).

4. Aube selon l'une quelconque des revendications 1 à 3, dans laquelle la surface inter-profilés (70) comporte une partie de révolution (38) ayant une forme de révolution par rapport à l'axe (A) de la couronne, située du côté de l'extrados (58) du profilé voisin (50) par rapport à la bosse (32).

5. Aube selon la revendication 4, dans laquelle ladite bosse (32) est reliée à ladite partie de révolution (38) par une surface radialement descendante (36).

6. Aube selon l'une quelconque des revendications 1 à 5, dans laquelle la bosse (32) présente un sommet situé axialement entre 0 et 50% du profilé (50) du côté amont.

7. Aube selon la revendication 6, dans laquelle la bosse (32) présente un sommet situé axialement entre 0 et 25% du profilé (50) du côté amont.

8. Aube selon l'une quelconque des revendications 1 à 7, dans laquelle la surface inter-profilés (70) comporte une partie ayant une forme de révolution par rapport à l'axe de couronne et s'étendant axialement sur toute la moitié aval du profilé (50).

9. Aube selon l'une quelconque des revendications 1 à 8, dans laquelle la bosse se prolonge en amont ou en aval de la surface inter-profilés (70).

10. Secteur de distributeur de turbomachine, comportant au moins une aube selon l'une quelconque des revendications 1 à 9.

11. Roue à aubes comportant une pluralité d'aubes selon l'une quelconque des revendications 1 à 9.

12. Turbomachine comportant au moins une roue à aubes selon la revendication 11.

## Claims

1. A blade (10) for a turbomachine impeller (100), comprising
an airfoil (50) formed with a pressure surface (56), a suction surface (58), a trailing edge (54), and a leading edge (52), and
a platform (60) extending at one of the ends of the airfoil in a direction which is globally perpendicular to a longitudinal direction of the airfoil,
the blade (10) being adapted to be arranged with a plurality of substantially identical blades to form a ring around a ring axis (A) and define therealong an upstream and a downstream area, with the ring having the airfoils arranged substantially radially therein, and the adjacent blade platforms (60) joining in pairs so as to form an inter-airfoil surface (70) linking the pressure surface (56') of an airfoil (50) to the suction surface (58) of the neighboring airfoil,
said blade being **characterized in that**, in mounted position, the inter-airfoil surface (70) joining the pressure surface (56') of the airfoil (50) of the blade (10) to the suction surface of the airfoil of a neighbouring blade comprises in an upstream half of the airfoil, a boss (32) located at a distance from the pressure surface, but closer to the pressure surface (56') of the airfoil (50) of the blade (10) than to the suction surface (58) of the airfoil of the neighbouring blade, and a recessed passage (34) located between the same and the pressure surface.

2. The blade according to claim 1, **characterized in that** the inter-airfoil surface has a profile located in a plane perpendicular to the axis of the ring and located axially in an upstream half of the airfoil, said profile successively comprising the recess followed by said boss, starting from the pressure surface of the airfoil.

3. The blade according to claim 1, wherein said recessed passage (34) comprises a part having a shape of revolution with respect to the ring axis (A).

4. The blade according to claim 1, wherein the inter-airfoil surface (70) comprises a part of revolution (38) having a shape of revolution with respect to the axis (A) of the ring, located on the side of the suction surface (58) of the neighboring airfoil (50) with respect to the boss (32).

5. The blade according to claim 4, wherein said boss (32) is linked to said part of revolution (38) by a radially descending surface (36).

6. The blade according to claim 1. wherein the boss (32) has an apex located axially between 0 and 50 % of the airfoil (50) on the upstream side.

7. The blade according to claim 6, wherein the boss (32) has an apex located axially between 0 and 25% of the airfoil (50) on the upstream side.

8. The blade according to claim 1, wherein the inter-airfoil surface (70) comprises a part having a shape of revolution with respect to the ring axis and extending axially throughout the downstream half of the airfoil (50).

9. The blade according to claim 1, wherein the boss is continued upstream or downstream of the inter-airfoil (70) surface.

10. A turbomachine distributor sector, comprising at least one blade according to any of claims 1 to 9.

11. An impeller comprising a plurality of blades according to any of claims 1 to 9.

12. A turbomachine comprising at least one impeller according to claim 11.

## Patentansprüche

1. Schaufel (10) für ein Schaufelrad (100) einer Turbomaschine, umfassend ein geformtes aerodynamisches Profilteil (50) mit einer Vorderseite (56), einer Rückseite (58), einer Austrittskante (54) und einer Eintrittskante, und
eine Plattform (60), die sich an einem der Enden des Profilteils in einer zu einer Längsrichtung des Profilteils im allgemeinen senkrechten Richtung erstreckt,
wobei die Schaufel (10) geeignet ist, mit einer Vielzahl von im wesentlichen identischen Schaufeln angeordnet zu werden, um einen Kranz um eine Kranzachse (A) herum zu bilden und um entlang dieser eine stromaufwärtige Seite und eine stromabwärtige Seite zu definieren, Kranz, bei dem die Profilteile im wesentlichen radial angeordnet sind und die Plattformen (60) von benachbarten Schaufeln paarweise verbunden sind, um eine die Vorderseite (56') eines Profilteils (50) mit der Rückseite (58) des benachbarten Profilteils verbindende Zwischenprofilteilfläche (70) zu bilden,
wobei die Schaufel **dadurch gekennzeichnet ist, daß** in der montierten Position die Zwischenprofilteilfläche (70), welche die Vorderseite (56') des Profilteils (50) der Schaufel (10) mit der Rückseite des Profilteils einer benachbarten Schaufel verbindet, in einer stromaufwärtigen Hälfte des Profilteils einen Buckel (32), der im Abstand von der Vorderseite, aber näher der Vorderseite (56') des Profilteils (50) der Schaufel (10) als der Rückseite (58) des Profilteils der benachbarten Schaufel gelegen ist, sowie einen zwischen diesem und der Vorderseite gelegenen vertieften Durchgang (34) umfaßt.

2. Schaufel nach Anspruch 1, **dadurch gekennzeichnet, daß** die Zwischenprofilteilfläche ein Profil aufweist, das in einer zur Achse des Kranzes senkrechten Ebene und axial in einer stromaufwärtigen Hälfte des Profilteils gelegen ist, wobei das Profil, von der Vorderseite des Profilteils ausgehend, nacheinander den vertieften Durchgang, gefolgt von dem Buckel aufweist.

3. Schaufel nach Anspruch 1 oder 2, wobei der vertiefte Durchgang (34) einen Teil umfaßt, der eine Rotationsform in Bezug auf die Kranzachse (A) aufweist.

4. Schaufel nach einem der Ansprüche 1 bis 3, wobei die Zwischenprofilteilfläche (70) einen Rotationsteil (38) mit einer Rotationsform in Bezug auf die Achse (A) des Kranzes umfaßt, der auf der Seite der Rückseite (58) des benachbarten Profilteils (50) gegenüber dem Buckel (32) gelegen ist.

5. Schaufel nach Anspruch 4, wobei der Buckel (32) durch eine radial abfallende Fläche (36) mit dem Rotationsteil (38) verbunden ist.

6. Schaufel nach einem der Ansprüche 1 bis 5, wobei der Buckel (32) einen Scheitel aufweist, der axial zwischen 0 und 50 % des Profilteils (50) auf der stromaufwärtigen Seite gelegen ist.

7. Schaufel nach Anspruch 6, wobei der Buckel (32) einen Scheitel aufweist, der axial zwischen 0 und 25 % des Profilteils (50) auf der stromaufwärtigen Seite gelegen ist.

8. Schaufel nach einem der Ansprüche 1 bis 7, wobei die Zwischenprofilteilfläche (70) einen Teil umfaßt, der eine Rotationsform in Bezug auf die Kranzachse aufweist und der sich axial über die gesamte stromabwärtige Hälfte des Profilteils (50) erstreckt.

9. Schaufel nach einem der Ansprüche 1 bis 8, wobei der Buckel sich stromaufwärts oder stromabwärts der Zwischenprofilteilfläche (70) fortsetzt.

10. Sektor eines Leitrades einer Turbomaschine, der wenigstens eine Schaufel nach einem der Ansprüche 1 bis 9 umfaßt.

11. Schaufelrad, das eine Vielzahl von Schaufeln nach einem der Ansprüche 1 bis 9 umfaßt.

12. Turbomaschine, die wenigstens ein Schaufelrad nach Anspruch 11 umfaßt.
